(19) Europäisches Patentamt
European Patent Office
Office européen des brevets

(11) EP 4 428 941 A1

(12) EUROPEAN PATENT APPLICATION

(43) Date of publication:
11.09.2024 Bulletin 2024/37

(21) Application number: 24158733.6

(22) Date of filing: 20.02.2024

(51) International Patent Classification (IPC):
$H01M\ 4/131^{(2010.01)}$   $H01M\ 4/134^{(2010.01)}$
$H01M\ 4/36^{(2006.01)}$   $H01M\ 4/38^{(2006.01)}$
$H01M\ 4/48^{(2010.01)}$   $H01M\ 10/0525^{(2010.01)}$

(52) Cooperative Patent Classification (CPC):
H01M 4/131; H01M 4/134; H01M 4/364;
H01M 4/366; H01M 4/386; H01M 4/483;
H01M 10/0525; H01M 4/587; H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.02.2023 KR 20230023806

(71) Applicant: SK On Co., Ltd.
Seoul 03161 (KR)

(72) Inventors:
• PARK, Gwi Ok
34124 Daejeon (KR)
• PARK, Eun Jun
34124 Daejeon (KR)
• KIL, Hyo Shik
34124 Daejeon (KR)
• LEE, In Ae
34124 Daejeon (KR)

(74) Representative: Stolmár & Partner
Patentanwälte PartG mbB
Blumenstraße 17
80331 München (DE)

(54) NEGATIVE ELECTRODE FOR LITHIUM SECONDARY BATTERY AND METHOD OF MANUFACTURING THE SAME

(57) Provided are a negative electrode for a lithium secondary battery and a method of manufacturing the same. An implementation may provide a negative electrode for a lithium secondary battery including: a Si-containing negative electrode active material, wherein when a value derived according to the following Equation (1) by charging/discharging a lithium secondary battery including a negative electrode and a positive electrode including a Li-containing positive electrode active material n times, discharging the battery to 2.5 V, disassembling the battery to obtain the negative electrode and the positive electrode, and analyzing the negative electrode and the positive electrode is $SEI_n$, a ($SEI_{100}$ - $SEI_5$) value is 10 or less:

$$(1) \quad SEI_n = ([Si]_0/[Si]_n - 1) - ((C_{LL} * C_W/C_{MW} * (1 - M_{Li}/M_{TM}) * Li_{MW})/A_{LL}).$$

EP 4 428 941 A1

**Description**

**TECHNICAL FIELD**

The following disclosure relates to a negative electrode for a lithium secondary battery and a method of manufacturing the same.

**BACKGROUND**

In recent years, a demand for environmentally friendly technologies for solving a global warming problem is rapidly increasing. In particular, as a technical demand for electric vehicles and energy storage systems (ESS) increases, a demand for a lithium secondary battery is also exploding.

A conventional lithium secondary battery generally uses a carbon (C)-based negative electrode material such as natural graphite and artificial graphite, but the energy density of the battery using graphite is low due to the low theoretical capacity of graphite of 372 mAh/g. Therefore, studies on a new negative electrode material for improving the low energy density are in progress. As a solution for solving energy density, a silicon (Si)-based negative electrode material having a high theoretical capacity of 3580 mAh/g is on the rise. However, the silicon-based negative electrode material has poor battery life characteristics due to a large volume expansion (~400%) in the process of repeated charging and discharging.

As a way to improve the life characteristics of the battery using a silicon-based negative electrode material, a silicon oxide-based negative electrode material is used or prelithiation treatment technology and the like are being developed. However, recently, since development of the components of a lithium secondary battery such as a negative electrode material, a positive electrode material, a separator, and an electrolyte solution has been diversified, it has become more difficult to confirm what the life characteristics of the negative electrode material is shown in the operation in a real lithium secondary battery.

**SUMMARY**

An embodiment of the present disclosure is directed to providing a negative electrode for a lithium secondary battery which shows excellent life characteristics in a lithium secondary battery including a negative electrode and a positive electrode, and a method of manufacturing the same.

In one general aspect, a negative electrode for a lithium secondary battery includes: a Si-containing negative electrode active material, wherein when a value derived according to the following Equation (1) by charging/discharging a lithium secondary battery including a negative electrode and a positive electrode including a Li-containing positive electrode active material $n$ times, discharging the battery to 2.5 V, disassembling the battery to obtain the negative electrode and the positive electrode, and analyzing the negative electrode and the positive electrode is $SEI_n$, a ($SEI_{100}$ - $SEI_5$) value is 10 or less:

$$(1) \quad SEI_n = ([Si]_0/[Si]_n - 1) - ((C_{LL} * C_W/C_{MW} * (1 - M_{Li}/M_{TM}) * Li_{MW})/A_{LL})$$

wherein $[Si]_0$ is a wt% of Si to the total weight of a negative electrode active material layer when ICP analysis is performed on the negative electrode active material layer of a negative electrode obtained by disassembling a lithium secondary battery which is charged/discharged 0 times, $[Si]_n$ is a wt% of Si to the total weight of the negative electrode active material layer when ICP analysis is performed on the negative electrode active material layer of a negative electrode obtained by disassembling a lithium secondary battery which is charged/discharged $n$ times and discharged to 2.5 V, and $C_{LL}$, $C_W$, $C_{MW}$, $M_{Li}$, $M_{TM}$, $Li_{MW}$, and $A_{LL}$ are values measured by analyzing a positive electrode and a negative electrode obtained by disassembling a lithium secondary battery which is charged/discharged $n$ times and discharged to 2.5 V, in which $C_{LL}$ is a loading level (mg/cm$^2$) of the positive electrode active material layer, $C_W$ is ratio of a weight of the positive electrode active material to a weight of the positive electrode active material layer, $C_{MW}$ is a molar mass (g/mol) of the positive electrode active material, $M_{Li}$ is a lithium molar quantity (mol) in a positive electrode active material layer measured by ICP analysis, $M_{TM}$ is a transition metal molar quantity (mol) in the positive electrode active material layer measured by ICP analysis, $Li_{MW}$ is a lithium molar mass, and $A_{LL}$ is a loading level (mg/cm$^2$) of the negative electrode active material layer.

In an implementation, the negative electrode for a lithium secondary battery in which when a value derived according to the following Equation (2) by charging/discharging the lithium secondary battery including the negative electrode and the positive electrode n times, discharging the battery to 2.5 V, disassembling the battery to obtain the negative electrode, and analyzing the negative electrode is $T_n$, a $(T_{100} - T_5)$ value may be 2 or less may be provided:

$$(2) \quad T_n = [M_{Li}/M_{Si}]_n$$

wherein $M_{Li}$ and $M_{Si}$ are values measured by analyzing a negative electrode obtained by disassembling a lithium secondary battery which was charged/discharged n times and discharged to 2.5 V, in which $M_{Li}$ is a lithium molar quantity (mol) in a negative electrode active material layer and $M_{Si}$ is a silicon molar quantity (mol) in the negative electrode active material layer.

In an implementation, in Equation (1), the $C_{LL}$ value may be 12 to 30 $mg/cm^2$.

In an implementation, in Equation (1), the $C_W$ value may be 0.9 or more.

In an implementation, in Equation (1), the $A_{LL}$ value may be 1 to 20 $mg/cm^2$.

In an implementation, the Si-containing negative electrode active material may include one or more of $SiO_x$ (0<x≤2), Si, a Si-containing alloy, and a Si/C composite.

In an implementation, the Si/C composite may include a porous carbon structure; and a Si-containing coating provided on an outer surface and an inner pore of the porous carbon structure.

In an implementation, the Si-containing negative electrode active material may include one or more of Li, Na, Mg, and K.

In an implementation, the Si-containing negative electrode active material may include lithium silicate represented by the following Chemical Formula 1:

[Chemical Formula 1]     $Li_x Si_y O_z$

wherein 1≤x≤6, 1≤y≤4, and 0<z≤7.

In an implementation, the Si-containing negative electrode active material may have a D10 of 2.0 um or more.

In another general aspect, a lithium secondary battery includes the negative electrode for a lithium secondary battery of the implementation.

Other features and aspects will be apparent from the following detailed description, the drawings, and the claims.

## DETAILED DESCRIPTION OF EMBODIMENTS

Advantages and features of the present disclosure and methods to achieve them will become apparent from the following implementations described in detail. However, the present disclosure is not limited to the implementations disclosed below, but will be implemented in various forms. The implementations of the present disclosure make the present disclosure thorough and are provided so that those skilled in the art can easily understand the scope of the present disclosure. Therefore, the present disclosure will be defined by the scope of the appended claims. Detailed description for carrying out the present disclosure will be provided below. "and/or" includes each of and all combinations of one or more of the mentioned items.

Unless otherwise defined herein, all terms used herein (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

In the present specification, it will be understood that when an element such as a layer, film, region, or substrate is referred to as being "on" or "above" another element, it can be "directly on" the other element or intervening elements may also be present.

"Dn" in the present specification refers to a diameter of a particle which is equivalent to n% in terms of a volume-based integrated fraction. Dn may be derived from particle size distribution results obtained by collecting a sample of particles to be measured in accordance with the standard of KS A ISO 13320-1 and performing analysis using Multisizer 4e Coulter counter available from Beckman Coulter. In an implementation, the particles may be active material particles.

According to an implementation, a negative electrode for a lithium secondary battery includes: a Si-containing negative electrode active material, wherein when a value derived according to the following Equation (1) by charging/discharging a lithium secondary battery including a negative electrode and a positive electrode including a Li-containing positive electrode active material n times, discharging the battery to 2.5 V, disassembling the battery to obtain the negative electrode and the positive electrode, and analyzing the negative electrode and the positive electrode is $SEI_n$, a $(SEI_{100} - SEI_5)$ value is 10 or less:

$$(1) \quad SEI_n = ([Si]_0/[Si]_n-1) \quad - \quad ((C_{LL}*C_W/C_{MW}*(1-$$

$$M_{Li}/M_{TM})*Li_{MW})/A_{LL})$$

wherein $[Si]_0$ is a wt% of Si to the total weight of a negative electrode active material layer when ICP analysis is performed on the negative electrode active material layer of a negative electrode obtained by disassembling a lithium secondary battery which is charged/discharged 0 times, $[Si]_n$ is a wt% of Si to the total weight of the negative electrode active material layer when ICP analysis is performed on the negative electrode active material layer of a negative electrode obtained by disassembling a lithium secondary battery which is charged/discharged n times and discharged to 2.5 V, and $C_{LL}$, $C_W$, $C_{MW}$, $M_{Li}$, $M_{TM}$, $Li_{MW}$, and $A_{LL}$ are values measured by analyzing a positive electrode and a negative electrode obtained by disassembling a lithium secondary battery which is charged/discharged n times and discharged to 2.5 V, in which $C_{LL}$ is a loading level ($mg/cm^2$) of the positive electrode active material layer, $C_W$ is ratio of a weight of a positive electrode active material to a weight of the positive electrode active material layer, $C_{MW}$ is a molar mass (g/mol) of the positive electrode active material, $M_{Li}$ is a lithium molar quantity (mol) in a positive electrode active material layer, $M_{TM}$ is a transition metal molar quantity (mol) in the positive electrode active material layer, $Li_{MW}$ is a lithium molar mass, and $A_{LL}$ is a loading level ($mg/cm^2$) of the negative electrode active material layer.

The lithium secondary battery disassembled in the implementation may be a freshly manufactured battery, or a finished battery or a battery purchased from the market. The finished battery or the battery purchased from the market may be previously subjected to 5 cycles or less of charge/discharge during the manufacturing process of the battery, for example, a formation process or the like. However, since changes in ICP analysis result values and the like described later due to performing 5 cycles or less of charge/discharge are extremely insignificant, ICP analysis may be performed on a positive electrode or a negative electrode obtained by discharging a finished battery or a battery purchased from the market to 2.5 V (vs. Li/Li$^+$) and disassembling the battery, by an ICP analysis method disclosed in the present disclosure.

In an implementation, the $[Si]_0$ and $[Si]_n$ may be measured by the following method. A negative electrode obtained by charging/discharging a lithium secondary battery 0 times or n times, discharging the battery to 2.5 V, and disassembling the battery is washed several times with an organic solvent such as dimethyl carbonate (DMC), and may be recovered by scraping off powder of a negative electrode active material layer so that a current collector is not included. The recovered negative electrode active material layer powder is used to measure a Si content by the following method, but the present disclosure is not limited thereto:

[1] 0.05 g of the recovered negative electrode active material layer powder is added to a 50 mL PP tube.
[2] Nitric acid is added to the PP tube and then the tube is placed in a hood for about 5 minutes.
[3] hydrofluoric acid is added thereto, a stopper part of the PP tube is immediately sealed with a parafilm, the material is dissolved at room temperature for 1 hour, and the tube is placed in a refrigerator for 12 hours.
[4] The PP tube is taken out, 45 mL of water is added thereto, the tube is placed in a refrigerator for 30 minutes to cool the content (preventing volatilization of a Si component), saturated boric acid water is added for neutralizing a hydrofluoric acid component, and stirring is performed at 60 rpm for 60 minutes.
[5] Filtration is performed for removing insoluble components to prepare a sample.
[6] ICP analysis is performed on the prepared sample to measure the Si content. The Si content is a wt% of Si included, based on the total weight of the negative electrode active material layer powder. Here, the ICP analysis may be performed using Optima 8300DV available from Perkin Elmer.

In an implementation, $C_{LL}$ may be measured by the following method, but is not limited thereto. An electrode coated with a positive electrode active material and a current collector which is not coated with an active material are punched out, respectively, with a circular punch having a diameter of 16 mm, and then their weights are measured. An amount of a positive electrode active material coated per area (loading level, $mg/cm^2$) is measured by subtracting a weight of a current collector which is not coated with an active material from a weight of an electrode coated with the positive electrode active material to measure a weight of an active material loaded to an electrode, which is then divided by an area coated with the active material. In an implementation, the $C_{LL}$ value may be 12 $mg/cm^2$ or more, 13 $mg/cm^2$ or more, 15 $mg/cm^2$ or more and 30 $mg/cm^2$ or less, 29 $mg/cm^2$ or less, or 27 $mg/cm^2$ or less, or a value between the numerical values, and specifically, 12 to 30 $mg/cm^2$, 13 to 29 $mg/cm^2$, or 15 to 27 $mg/cm^2$, but is not limited thereto.

In an implementation, the $C_W$ may be determined as a ratio of a weight of the positive electrode active material to a weight of the positive electrode active material layer. In an implementation, $C_W$ may be 0.9 or more, 0.92 or more, 0.93 or more and 0.99 or less, or a value between the numerical values, and specifically, 0.9 to 0.99, 0.92 to 0.99, or 0.93 to 0.99, but is not limited thereto.

In an implementation, the $C_{MW}$ may be determined by adding molar masses of elements in the used positive electrode active material. For example, as the positive electrode active material, when $Li[Ni_xCo_yMn_z]O_2$ (x+y+z=1) is used, the molar mass $C_{MW}$ of the positive electrode active material may be derived by the following formula:

```
C_MW = 6.941 + 58.693 * x + 58.933 * y + 54.938 * z +

15.999 * 2.
```

In an implementation, the $M_{Li}$ and $M_{TM}$ may be measured by the following method. A positive electrode obtained by charging/discharging the lithium secondary battery n times, discharging the battery to 2.5 V, and disassembling the battery is washed several times with an organic solvent such as dimethyl carbonate (DMC), and may be recovered by scraping off powder of a positive electrode active material layer so that a current collector is not included. The recovered powder of the positive electrode active material layer is ICP analyzed to measure a Li content and a transition metal content, which are then divided by a Li molar mass and a transition metal molar mass, respectively, to determine $M_{Li}$ and $M_{TM}$. The ICP analysis may be performed by the following method, but is not limited thereto. The molar mass of the transition metal may be an average molar mass derived according to the type and the composition of transition metals of the ICP-analyzed positive electrode active material layer.

[1] 0.02 g of the recovered powder of the positive electrode active material layer is added to a 50 mL PP tube.
[2] Hydrochloric acid and hydrogen peroxide are added to the PP tube, the tube is placed in a hood for about 20 minutes, and bubbles are removed with shaking.
[3] The tube is heated for 30 minutes in a heating block at 100°C, hydrochloric acid is further added, and dilution is performed with ultrapure water.
[4] Filtration is performed for removing insoluble components to prepare a sample.
[5] ICP analysis is performed on the prepared sample to measure the Li content and the transition metal content. The Li content and the transition metal content are a Li weight and a transition metal weight in powder of the positive electrode active material layer. Herein, the ICP analysis may be performed using 5800 ICP-OES available from Agilent.

In an implementation, the transition metal is one or more elements selected from Groups 3 to 12 of the periodic table, and for example, may include one or more of Ti, V, Cr, Ni, Co, Mn, Zr, Cu, and Fe, and specifically, for example, may include one or more of Ni, Co, Mn, Zr, Cu, and Fe.
In an implementation, the $Li_{MW}$ may be 6.941 g/mol as a molar mass of lithium.
In an implementation, the $A_{LL}$ may be measured by the following method, but is not limited thereto. An electrode coated with a negative electrode active material and a current collector which is not coated with an active material are punched out, respectively, with a circular punch having a diameter of 16 mm, and then their weights are measured. An amount of a negative electrode active material coated per area (loading level, $mg/cm^2$) is measured by subtracting a weight of a current collector which is not coated with an active material from a weight of an electrode coated with the negative electrode active material to measure a weight of an active material loaded to an electrode, which is then divided by an area coated with the active material. In an implementation, the $A_{LL}$ value may be 1 $mg/cm^2$ or more, 2 $mg/cm^2$ or more, 3 $mg/cm^2$ or more and 20 $mg/cm^2$ or less, 18 $mg/cm^2$ or less, 15 $mg/cm^2$ or less, or a value between the numerical values, and specifically, 1 to 20 $mg/cm^2$, 2 to 18 $mg/cm^2$, or 3 to 15 $mg/cm^2$, but is not limited thereto.
In an implementation, the extent to which a $(SEI_{100} - SEI_5)$ value derived according to Equation (1), that is, a result value obtained by ICP analysis of the negative electrode active material layer and the positive electrode active material layer contributes to the life characteristics of a real lithium secondary battery may be quantitatively evaluated. In an implementation, the $(SEI_{100} - SEI_5)$ value is controlled to a specific range, thereby providing a negative electrode showing excellent life characteristics in a real lithium secondary battery.
In an implementation, when the $(SEI_{100} - SEI_5)$ value is 10 or less, an electrolyte solution decomposition reaction is suppressed by physical and chemical changes of an electrode active material during a plurality of charges/discharges for a long time, thereby improving life characteristics of a battery. Considering the above perspective, as a specific implementation for further improving the life characteristics, the $(SEI_{100} - SEI_5)$ value may be 9.5 or less or 9.0 or less.
In an implementation, the Si-containing negative electrode active material may include one or more of $SiO_x$ (0<x≤2), Si, a Si-containing alloy, and a Si/C composite. Since the silicon oxide $SiO_x$ (0<x≤2) has a low volume expansion ratio compared to silicon, it has an effect of further improving the life characteristics. Considering this, in a specific implementation, the Si-containing negative electrode active material may include $SiO_x$ (0<x≤2); and/or one or more of Si, a Si-containing alloy, and Si/C composite. The Si-containing alloy may be, for example, a Si-Q alloy. Q is an element selected from the group consisting of alkali metals, alkaline earth metals, group 13 elements, group 14 elements other than Si, group 15 elements, group 16 elements, transition metals, rare earth elements, and combinations thereof. The element Q may be, for example, selected from the group consisting of Li, Mg, Na, K, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

In a specific implementation, the Si/C composite may include a porous carbon structure; and a Si-containing coating provided on an outer surface and an inner pore of the porous carbon structure, but is not limited thereto.

For the porous carbon structure, a porous carbon structure is sufficient, but the composition is not particularly limited. In an implementation, the porous carbon structure may be obtained by mixing phenol and formaldehyde, adding triethylamine thereto to obtain a polymer, further adding hexamethylenetetramine as a crosslinking agent for curing to obtain a carbon material, and then, if necessary, performing classification and/or cleaning and then carbonization, but is not limited thereto.

In another implementation, the porous carbon structure may be obtained by copolymerizing styrene and divinylbenzene to obtain a copolymer, and, if necessary, performing cleaning and then carbonization, but is not limited thereto.

According to an implementation for complementing initial efficiency and capacity properties, the Si-containing negative electrode active material may include one or more of Li, Na, Mg, and K. In a specific implementation, the Li, Na, Mg, and K may be doped into the Si-containing negative electrode active material or may be present in a state of being chemically bonded to the Si-containing negative electrode active material.

In an implementation, the Si-containing negative electrode active material may include lithium silicate represented by the following Chemical Formula 1:

[Chemical Formula 1]     $Li_xSi_yO_z$

wherein $1 \leq x \leq 6$, $1 \leq y \leq 4$, and $0 < z \leq 7$.

In a specific implementation, the Si-containing negative electrode active material may have a D10 of 2.0 um or more. In the specific implementation, fine active material particles having a small particle diameter may be removed to decrease a surface area, thereby suppressing a side reaction to promote a reversible reaction in the negative electrode.

In an implementation, the Li-containing positive electrode active material may include Li; and one or more of Ni, Co, and Mn. In an implementation, the Li-containing positive electrode active material may be a composite oxide of Li with one or more of Ni, Co, and Mn. As a specific implementation, the Li-containing positive electrode active material may include 60% or more or 80% or more of Ni based on the total weight of the positive electrode active material, but is not limited thereto.

As a specific implementation for further improving life characteristics, the negative electrode for a lithium secondary battery further satisfying that when a value derived according to the following Equation (2) by charging/discharging the lithium secondary battery including the negative electrode and the positive electrode, discharging the battery to 2.5 V, disassembling the battery to obtain the negative electrode, and analyzing the negative electrode is $T_n$, a $(T_{100} - T_5)$ value may be 2 or less may be provided:

$$(2) \quad T_n = [M_{Li}/M_{Si}]_n$$

wherein $M_{Li}$ and $M_{Si}$ are values measured by analyzing a negative electrode obtained by disassembling a lithium secondary battery which was charged/discharged n times and discharged to 2.5 V, in which $M_{Li}$ is a lithium molar quantity (mol) in a negative electrode active material layer and $M_{Si}$ is a silicon molar quantity (mol) in the negative electrode active material layer.

In an implementation, the $M_{Li}$ and $M_{Si}$ may be measured by the following method. A negative electrode obtained by charging/discharging the lithium secondary battery manufactured under the conditions described above n times, discharging the battery to 2.5 V, and disassembling the battery is washed several times with an organic solvent such as dimethyl carbonate (DMC), and may be recovered by scraping off powder of a negative electrode active material layer so that a current collector is not included. The recovered powder of the negative electrode active material layer is ICP analyzed to measure a Li content and a Si content, which are then divided by a Li molar mass and a Si molar mass, respectively, to determine $M_{Li}$ and $M_{Si}$. ICP analysis may be performed by the following method:

[1] 0.05 g of the recovered negative electrode active material layer powder is added to a 50 mL PP tube.
[2] Nitric acid is added to the PP tube and then the tube is placed in a hood for about 5 minutes.
[3] hydrofluoric acid is added thereto, a stopper part of the PP tube is immediately sealed with a parafilm, the material is dissolved at room temperature for 1 hour, and the tube is placed in a refrigerator for 12 hours.
[4] The PP tube is taken out, 45 mL of water is added thereto, the tube is placed in a refrigerator for 30 minutes to cool the content (preventing volatilization of a Si component), saturated boric acid water is added for neutralizing a hydrofluoric acid component, and stirring is performed at 60 rpm for 60 minutes.

[5] Filtration is performed for removing insoluble components to prepare a sample.

[6] ICP analysis is performed on the prepared sample to measure the Li content and the Si content. The Li content and the Si content are a Li weight and a Si weight in powder of the negative electrode active material layer. Here, the ICP analysis may be performed using Optima 8300DV available from Perkin Elmer.

In the implementation, the negative electrode to be analyzed may be a freshly manufactured electrode or obtained by disassembling a battery of a finished product or a battery purchased from the market, and since it is as described above, its description will be omitted for convenience.

In an implementation, a ratio of Li present as an irreversible phase to Si performing a reversible reaction in a negative electrode may be quantitatively evaluated as a $(T_{100} - T_5)$ value derived according to Equation (2). That is, the irreversible reaction occurring in the negative electrode may be quantitatively evaluated. In an implementation, the $(T_{100} - T_5)$ value is controlled to a specific range to provide a negative electrode with a suppressed irreversible reaction, thereby providing a negative electrode showing better life characteristics in a real lithium secondary battery. In an implementation for securing better life properties, the $(T_{100} - T_5)$ value may be 2 or less.

The negative electrode for a lithium secondary battery according to an implementation of the present disclosure includes a current collector, and a negative electrode active material layer which is provided on the current collector and includes the negative electrode active material and a binder.

According to an implementation of the present disclosure, the current collector may be selected from the group consisting of a copper foil, a nickel foil, a stainless steel foil, a titanium foil, a nickel foam, a copper foam, a polymer substrate coated with a conductive metal, and a combination thereof. However, the current collector is not limited to the examples described above.

According to an implementation of the present disclosure, the negative electrode active material may optionally further include a material capable of reversibly inserting/desorbing a lithium ion, a lithium metal, an alloy of lithium metal, a material capable of being doped and dedoped with lithium, or a transition oxide.

An example of the material capable of reversibly inserting/desorbing a lithium ion may include a carbon material, that is, a carbon-based negative electrode active material which is commonly used in the lithium secondary battery. An example of the carbon-based negative electrode active material may include crystalline carbon, amorphous carbon, or a combination thereof. The crystalline carbon may include, for example, graphite such as amorphous, plate-like, flake-like, spherical, or fibrous natural graphite or artificial graphite. An example of the amorphous carbon may include soft carbon, hard carbon, a mesophase pitch carbide, calcined coke, and the like.

The alloy of lithium metal may be, for example, an alloy of lithium with a metal selected from the group consisting of Na, K, Rb, Cs, Fr, Be, Mg, Ca, Sr, Si, Sb, Pb, In, Zn, Ba, Ra, Ge, Al, and Sn.

The material capable of doping and dedoping with lithium may be a Si-based material, for example, Si, $SiO_x$ ($0 < x \leq 2$), a Si-Q alloy (Q is an element selected from the group consisting of alkali metals, alkaline earth metals, Group 13 elements, Group 14 elements, Group 15 elements, Group 16 elements, transition metals, rare-earth elements, and combinations thereof, but is not Si), a Si-carbon composite, Sn, $SnO_2$, a Sn-R alloy (R is an element selected from the group consisting of alkali metals, alkaline earth metals, Group 13 elements, Group 14 elements, Group 15 elements, Group 16 elements, transition metals, rare-earth elements, and combinations thereof, but is not Sn), a Sn-carbon composite, and the like, and also, a mixture of at least one thereof and $SiO_2$ may be used. The elements Q and R may be, for example, selected from the group consisting of Na, K, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

The transition metal oxide may be, for example, a lithium titanium oxide.

According to an implementation of the present disclosure, the binder serves to adhere the negative electrode active material particles to each other well, and also serves to adhere the negative electrode active material to the current collector well. As the binder, all binders known in the art may be used, but for example, the binder may be a water-based binder, and a non-limiting example of the water-based binder may include one or more of polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, various copolymers thereof, and the like. For example, the binder may include one or more of carboxyl methyl cellulose (CMC), styrene-butadiene rubber (SBR), and a mixture thereof.

The negative electrode active material layer according to an implementation may optionally further include a conductive material. The conductive material is used for imparting conductivity to an electrode, and any material having conductivity without causing a chemical change to a battery may be used without limitation. An example of the conductive material may include one or more of carbon-based materials such as natural graphite, artificial graphite, carbon black, acetylene black, ketjen black, carbon fiber, single-walled carbon nanotubes (SW-CNT), and multi-walled carbon nanotubes (MW-CNT); metal-based materials such as metal powder or metal fiber of copper, nickel, aluminum, silver, and the like; conductive polymers such as a polyphenylene derivative; and mixtures thereof.

The contents of the binder and the conductive material in the negative electrode active material layer may be, for example, 0.1 to 10.0 wt%, for example, 0.1 to 5.0 wt%, respectively, with respect to the total weight of the negative electrode active material layer. However, the contents of the binder and the conductive material are not limited to the example described above.

In an implementation, the positive electrode may include, for example, a current collector and a positive electrode active material layer formed by applying a positive electrode slurry including a positive electrode active material on the current collector.

The current collector may be a current collector of the negative electrode described above, and any known material in the art may be used, but the present disclosure is not limited thereto.

The positive electrode active material layer includes the positive electrode active material described above, and may optionally further include a binder and a conductive material. The binder and the conductive material may be, for example, the negative electrode binder and the negative electrode conductive material described above, and may be a material known in the art. However, the binder and the conductive material are not limited to the example described above.

A method of manufacturing the negative electrode for a lithium secondary battery of the present implementation is not particularly limited as long as the negative electrode for a lithium secondary battery of the implementation described above may be provided. However, as an example of the method of manufacturing a negative electrode for a lithium secondary battery, a negative electrode slurry in which the negative electrode active material of the implementation, a binder, and the like are dispersed may be applied on a current collector, dried, and rolled to prepare a negative electrode active material layer on the current collector. The negative electrode slurry may further include various additives known in the art together with the negative electrode active material, and an example of the additive may include a thickener and a conductive material, but is not limited thereto.

According to an implementation, a lithium secondary battery including the negative electrode described above, the positive electrode described above, a separator provided between the negative electrode and the positive electrode, and an electrolyte solution may be provided.

The separator may include, for example, glass fiber, polyester, polyethylene, polypropylene, polytetrafluoroethylene, or a combination thereof, and may be in the form of nonwoven or woven fabric. The separator may be a polyolefin-based polymer separator such as polyethylene and polypropylene, a separator coated with a composition including a ceramic component or a polymer material for securing heat resistance or mechanical strength, or a separator known in the art. The separator may optionally have, for example, a monolayer or multilayer structure. However, the material and the shape of the separator are not limited to the examples.

The electrolyte solution may include an organic solvent and a lithium salt.

The organic solvent serves as a medium in which ions involved in the electrochemical reaction of a battery may move. The organic solvent may be, for example, a carbonate-based, ester-based, ether-based, ketone-based, alcohol-based, or aprotic solvent alone or in combination of two or more, and when it is used in combination of two or more, a mixing ratio may be properly adjusted depending on the battery performance to be desired. A specific example of the organic solvent may include one or more of ethylene carbonate (EC), ethyl methyl carbonate (EMC), diethyl carbonate (DEC), and a mixture thereof. However, the organic solvent is not limited to the examples described above.

The lithium salt is dissolved in the organic solvent and acts as a source of lithium ions in the battery to allow basic operation of the lithium secondary battery, and promotes movement of lithium ions between a positive electrode and a negative electrode. The lithium salt may include, for example, $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), $LiCl$, $LiI$, $LiB(C_2O_4)_2$, or a combination thereof. However, the lithium salt is not limited to the examples described above.

A concentration of the lithium salt may be, for example, 0.1 to 2.0 M. When the lithium salt concentration is within the range, the electrolyte solution has appropriate conductivity and viscosity, and thus, excellent electrolyte solution performance may be shown.

The electrolyte solution according to an example may further include an additive such as pyridine, triethylphosphate, triethanolamine, cyclic ether, ethylene diamine, n-glyme, hexaphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, and aluminum trichloride, if necessary, for improving charge/discharge properties, flame retardant properties, and the like. For example, the electrolyte solution may further include a halogen-containing additive such as carbon tetrachloride and ethylene trifluoride for imparting incombustibility. For example, the electrolyte solution may further include an additive such as vinylene carbonate (VC), fluoro-ethylene carbonate (FEC), 1,3-propanesultone (PRS), fluoro-propylene carbonate (FPC), and lithium bis(oxalate)borate (LiBOB) for improving preservation properties at a high temperature.

In an implementation, the lithium secondary battery may be manufactured by laminating the negative electrode, the separator, and the positive electrode in this order to form an electrode assembly, placing the manufactured electrode assembly in a cylindrical battery case or an angled battery case, and then injecting an electrolyte solution. The lithium secondary battery according to another implementation may be manufactured by laminating the electrode assembly, immersing the assembly in the electrolyte solution, placing the resulting product in a battery case, and sealing the case. However, the method of manufacturing a lithium secondary battery is not limited to the examples described above.

As the battery case, those commonly used in the art may be adopted and there is no limitation in appearance depending on the battery use, and for example, a cylindrical shape, an angled shape, a pouch shape, a coin shape, or the like using a can may be used.

The lithium secondary battery of an implementation may be used in a battery cell used as a power supply of a small device, and also may be used as a unit cell in a medium or large battery module including a plurality of battery cells. An example of the medium or large battery module may include an electric automobile, a hybrid electric automobile, a plug-in hybrid electric automobile, a system for power storage, and the like. However, the use of the lithium secondary battery is not limited to the examples described above.

Hereinafter, the preferred examples and the comparative examples of the present disclosure will be described. However, the following examples are only a preferred example of the present disclosure, and the present disclosure is not limited thereto.

The charge/discharge and disassembly conditions of a secondary battery according to the present implementation will be first described, and then the measurement of physical properties of a positive electrode and a negative electrode in the secondary battery, and an evaluation method thereof will be described.

**[Charge/discharge and disassembly conditions of secondary battery]**

A secondary battery was charged/discharged n times under charge conditions of CC-CV 0.5 C 4.2 V 0.05 C CUT-OFF and discharge conditions of CC 0.5 C 2.5 V CUT-OFF, discharged to 2.5 V, and disassembled to obtain a negative electrode and a positive electrode.

**[ICP analysis of negative electrode active material layer - $[Si]_0$, $[Si]_n$]**

$[Si]_0$ and $[Si]_n$ were measured by the following method. A negative electrode obtained by charging/discharging the lithium secondary battery 0 times or n times, discharging the battery to 2.5 V, and disassembling the battery was washed several times with an organic solvent such as dimethyl carbonate (DMC), and was recovered by scraping off powder of a negative electrode active material layer so that a current collector was not included. The recovered powder of the negative electrode active material layer was used to measure the Si content by the following method:

[1] 0.05 g of the recovered negative electrode active material layer powder was added to a 50 mL PP tube.
[2] Nitric acid was added to the PP tube and then the tube was placed in a hood for about 5 minutes.
[3] hydrofluoric acid was added thereto, a stopper part of the PP tube was immediately sealed with a parafilm, the material was dissolved at room temperature for 1 hour, and the tube was placed in a refrigerator for 12 hours.
[4] The PP tube was taken out, 45 mL of water was added thereto, the tube was placed in a refrigerator for 30 minutes to cool the content (preventing volatilization of a Si component), saturated boric acid water was added for neutralizing a hydrofluoric acid component, and stirring was performed at 60 rpm for 60 minutes.
[5] Filtration was performed for removing insoluble components to prepare a sample.
[6] ICP analysis was performed on the prepared sample to measure the Si content. The Si content was a Si wt% with respect to the total weight of the powder of the negative electrode active material layer. At this time, the ICP analysis was performed using Optima 8300DV available from Perkin Elmer.

**[Loading level ($C_{LL}$, mg/cm$^2$) of positive electrode active material layer]**

An electrode coated with a positive electrode active material and a current collector which was not coated with an active material were punched out, respectively, with a circular punch having a diameter of 16 mm, and then their weights were measured. An amount of a positive electrode active material coated per area (loading level, mg/cm$^2$) was measured by subtracting a weight of a current collector which was not coated with an active material from a weight of an electrode coated with the positive electrode active material to measure a weight of an active material loaded to an electrode, which was then divided by an area coated with the active material.

**[Weight ratio ($C_W$) of positive electrode active material]**

It was determined as a ratio of the weight of a positive electrode active material to the weight of a positive electrode active material layer.

**[Molar mass of positive electrode active material ($C_{MW}$, g/mol)]**

It was determined by adding the molar masses of elements in the positive electrode active material used. The molar mass of the positive electrode active material, $Li[Ni_{0.88}Co_{0.1}Mn_{0.02}]O_2$ was 97.581 g/mol. The molar mass of the positive electrode active material was determined by adding the molar masses of lithium (Li), nickel (Ni), cobalt (Co), manganese (Mn), and oxygen (O). The molar mass of lithium (Li) was 6.941 g/mol, the molar mass of nickel (Ni) was 58.693 g/mol, the molar mass of cobalt (Co) was 58.933 g/mol, the molar mass of manganese (Mn) was 54.938 g/mol, and the molar mass of oxygen (O) was 15.999 g/mol.

**[Lithium molar quantity ($M_{Li}$, mol) and transition metal molar quantity ($M_{TM}$, mol) in positive electrode active material layer]**

$M_{Li}$ and $M_{TM}$ were measured by the following method. A positive electrode obtained by charging/discharging the lithium secondary battery n times, discharging the battery to 2.5 V, and disassembling the battery was washed several times with an organic solvent such as dimethyl carbonate (DMC), and was recovered by scraping off powder of a positive electrode active material layer so that a current collector was not included. The recovered powder of the positive electrode active material layer was ICP analyzed to measure a Li content and a transition metal content, which were then divided by a Li molar mass and a transition metal molar mass, respectively, to determine $M_{Li}$ and $M_{TM}$. ICP analysis was performed by the following method: The molar mass of the transition metal was an average molar mass derived according to the type and the content ratio of transition metals of the ICP-analyzed positive electrode active material layer.

[1] 0.02 g of the recovered powder of the positive electrode active material layer was added to a 50 mL PP tube.
[2] Hydrochloric acid and hydrogen peroxide were added to the PP tube, the tube was placed in a hood for about 20 minutes, and bubbles were removed with shaking.
[3] The tube was heated for 30 minutes in a heating block at 100°C, hydrochloric acid was further added, and dilution was performed with ultrapure water.
[4] Filtration was performed for removing insoluble components to prepare a sample.
[5] ICP analysis was performed on the prepared sample to measure the Li content and the transition metal content. The Li content and the transition metal content were a Li weight and a transition metal weight in powder of the positive electrode active material layer. At this time, the ICP analysis may be performed using 5800 ICP-OES available from Agilent.

**[Molar mass of lithium ($Li_{MW}$, g/mol)]**

A molar mass of lithium was 6.941 g/mol.

**[Loading level of negative electrode active material layer ($A_{LL}$, mg/cm$^2$)]**

An electrode coated with a negative electrode active material and a current collector which was not coated with an active material were punched out, respectively, with a circular punch having a diameter of 16 mm, and then their weights were measured. An amount of a negative electrode active material coated per area (loading level, mg/cm$^2$) was measured by subtracting a weight of a current collector which was not coated with an active material from a weight of an electrode coated with the negative electrode active material to measure a weight of an active material loaded to an electrode, which was then divided by an area coated with the active material.

**[$SEI_n$]**

The $[Si]_0$, $[Si]_n$, $C_{LL}$, $C_W$, $C_{MW}$, $M_{Li}$, $M_{TM}$, $Li_{MW}$, and $A_{LL}$ values derived by the above methods were substituted into the following Equation (1) to derive $SEI_n$:

$$(1) \quad SEI_n = ([Si]_0/[Si]_n - 1) - ((C_{LL} \cdot C_W / C_{MW} \cdot (1 - M_{Li}/M_{TM}) \cdot Li_{MW}) / A_{LL})$$

**[Lithium molar quantity ($M_{Li}$, mol) and silicon molar quantity ($M_{Si}$, mol) in negative electrode active material layer]**

$M_{Li}$ and $M_{Si}$ were measured by the following method. A negative electrode obtained by charging/discharging the lithium secondary battery n times, discharging the battery to 2.5 V, and disassembling the battery was washed several times with an organic solvent such as dimethyl carbonate (DMC), and was recovered by scraping off powder of a negative electrode active material layer so that a current collector was not included. The recovered powder of the negative electrode active material layer was ICP analyzed to measure a Li content and a Si content, which were then divided by a Li molar mass and a Si molar mass, respectively, to determine $M_{Li}$ and $M_{Si}$. ICP analysis was performed by the following method:

[1] 0.05 g of the recovered negative electrode active material layer powder was added to a 50 mL PP tube.
[2] Nitric acid was added to the PP tube and then the tube was placed in a hood for about 5 minutes.
[3] hydrofluoric acid was added thereto, a stopper part of the PP tube was immediately sealed with a parafilm, the material was dissolved at room temperature for 1 hour, and the tube was placed in a refrigerator for 12 hours.
[4] The PP tube was taken out, 45 mL of water was added thereto, the tube was placed in a refrigerator for 30 minutes to cool the content (preventing volatilization of a Si component), saturated boric acid water was added for neutralizing a hydrofluoric acid component, and stirring was performed at 60 rpm for 60 minutes.
[5] Filtration was performed for removing insoluble components to prepare a sample.
[6] ICP analysis was performed on the prepared sample to measure the Li content and the Si content. The Li content and the Si content were a Li weight and a Si weight in powder of the negative electrode active material layer. At this time, the ICP analysis was performed using Optima 8300DV available from Perkin Elmer.

$M_{Li}$ and $M_{Si}$ derived as described above were substituted into the following Equation (2) to derive a $T_n$ value:

$$(2) \quad T_n = [M_{Li}/M_{Si}]_n.$$

**[Battery performance state (SOH@60)]**

A lithium secondary battery was evaluated for common charge life characteristics in a DOD94 (SOC2-96) range in a chamber maintained at 35°C. The battery was charged with 0.3 C to a voltage corresponding to SOC96 under constant current/constant voltage (CC/CV) conditions, 0.05C cut-off, and discharged with 0.3 C to a voltage corresponding to SOC2 under constant current (CC) conditions, and the discharge capacity was measured. The process was repeatedly performed and the discharge capacity retention rate was measured, and the number of cycles at which the discharge capacity retention rate was 60% was shown.

**{Examples}**

(Example 1)

Negative electrode

1) Manufacture of porous carbon structure

i) Synthesis of resol oligomer Phenol and formaldehyde were mixed at a mole ratio of 1:2, 1.5 wt% of triethylamine based on the total weight of the mixture was added, and the reaction was performed with stirring at 85°C for 4 h, at 160 rpm to obtain a resol oligomer.
ii) Suspension stabilization of resol oligomer: 1 g of polyvinyl alcohol (PVA) was dispersed in a water-dispersible medium, and the dispersion was added to the resol oligomer.
iii) Curing of resol oligomer: 3 g of hexamethylenetetramine (HMTA) as a curing agent was added and the reaction was performed with stirring at 98°C for 12 h at 400 rpm to perform curing.
iv) Obtaining carbon material: The cured resol oligomer was classified using a sieve and washed with $H_2O$.
v) An unreacted monomer and an oligomer were removed from the washed resol oligomer using ethanol and drying was performed.
vi) The dried resol oligomer was fired at 900°C for 1 hour under a nitrogen atmosphere. At this time, $CO_2$ gas was added at 1 L/min and carbonized at 900°C.

2) Formation of Si-containing coating A silane gas was injected to a CVD coater at a flow speed of 50 to 100 mL/min, the carbon structure was heated up to less than 600°C at a heating rate of 5 to 20°C/min, and was maintained at less than 600°C for about 120 to 240 minutes to prepare a Si-containing negative electrode active material of a Si/C composite having a Si-containing coating on the outer surface and the inner pore of the porous carbon structure.

3) Manufacture of negative electrode 5 to 30 wt% of the result of the previous process (Si-containing negative electrode active material), 66 to 92 wt% of artificial graphite, 0.05 to 0.3 wt% of single wall-CNT (SW-CNT), 1.0 to 2.0 wt% of a carboxyl methyl cellulose (CMC) binder, and 1.0 to 3.0 wt% of a styrene-butadiene rubber (SBR) binder were mixed in distilled water to prepare a negative electrode slurry. The negative electrode slurry was applied on a Cu foil current collector, dried, and rolled to manufacture a negative electrode having a negative electrode active material layer provided on the current collector by a common process.

Positive electrode

Li[Ni$_{0.88}$Co$_{0.1}$Mn$_{0.02}$]O$_2$ as a positive electrode active material, carbon black as a conductive material, and polyvinylidene fluoride (PVdF) as a binder were mixed at a weight ratio of 96.5:2:1.5 to prepare a slurry. The slurry was evenly applied on an aluminum foil having a thickness of 12 um and was dried under vacuum to manufacture a positive electrode for a secondary battery.

Lithium secondary battery (full cell)

The positive electrode and the negative electrode were laminated by notching at predetermined sizes, respectively, a separator (polyethylene, thickness of 13 $\mu$m) was interposed between the positive electrode and the negative electrode to form an electrode assembly, and then tab parts of the positive electrode and the negative electrode were welded, respectively. An assembly of welded positive electrode/ separator/ negative electrode was placed in a pouch, and three sides except an electrolyte solution injection side were sealed. At this time, a portion with the electrode tab was included in a sealing part. The electrolyte solution was injected through the sides other than the sealing part, the remaining sides were sealed, impregnation was performed for 12 hours or more. As the electrolyte solution, a solution obtained by dissolving 1M LiPF$_6$ in a mixed solvent of EC/EMC/DEC (25/45/30; volume ratio) and adding 1 wt% of vinylene carbonate (VC), 0.5 wt% of 1,3-propenesultone (PRS), and 0.5 wt% of lithium bis(oxalato)borate (LiBOB) was used. Thereafter, pre-charging was performed at a current corresponding to 0.25 C for 36 minutes. After 1 hour, degassing was performed, aging was performed for 24 more, and then formation charge/discharge was performed (charge condition: CC-CV 0.2 C 4.2 V 0.05 C CUT-OFF, discharge condition: CC 0.2 C 2.5 V CUT_OFF).

(Examples 2 to 4)

Negative electrode active materials on which a Si-containing coating was formed, negative electrodes, and lithium secondary batteries (full cells) including the negative electrode were manufactured in the same manner as in Example 1, except that the temperature and the stirring time were adjusted during synthesis of the resol oligomer and a firing temperature was adjusted during carbonization to prepare a porous carbon structure having a controlled pore size.

(Example 5)

1) Manufacture of porous carbon structure

i) Styrene (PS) and divinylbenzene (DVB) were polymerized by performing an emulsifier-free emulsion polymerization method under the following conditions. 360 mL of distilled water, 43.2 mL of ethanol, 40 mL of styrene, and 4 mL of divinylbenzene were added to a double jacket reactor to which a reflux cooler was attached, and stirred at room temperature for 30 minutes at 300 rpm under a nitrogen atmosphere. Thereafter, an aqueous solution of 0.37 g of potassium persulfate dissolved in 50 mL of distilled water was added to the reactor and stirring was performed at 70°C for 24 hours at 300 rpm.
ii) An unreacted monomer and an oligomer were removed using ethanol from the result of the process i) and drying was performed.
iii) The dried polymer was fired at 900°C for 1 hour under a nitrogen atmosphere. At this time, CO$_2$ gas was added at 1 L/min and carbonized at 900°C.

2) Formation of Si-containing coating A silane gas was injected to a CVD coater at a flow speed of 50 to 100 mL/min, the carbon structure was heated up to less than 600°C at a heating rate of 5 to 20°C/min, and was maintained at less than 600°C for about 120 to 240 minutes to prepare a Si-containing negative electrode active material of a Si/C composite having a Si-containing coating on the outer surface and the inner pore of the porous carbon structure.

3) Manufacture of negative electrode 5 to 30 wt% of the result of the previous process (Si-containing negative electrode active material), 66 to 92 wt% of artificial graphite, 0.05 to 0.3 wt% of single wall-CNT (SW-CNT), 1.0 to 2.0 wt% of a carboxyl methyl cellulose (CMC) binder, and 1.0 to 3.0 wt% of a styrene-butadiene rubber (SBR) binder were mixed in distilled water to prepare a negative electrode slurry. The negative electrode slurry was applied on a Cu foil current collector, dried, and rolled to manufacture a negative electrode having a negative electrode active material layer provided on the current collector by a common process. Thereafter, a lithium secondary battery (half cell) including the negative electrode was manufactured.

(Examples 6 and 7)

Negative electrodes, positive electrodes, and lithium secondary batteries (full cells) were manufactured in the same manner as Example 1, except that the negative electrode active material was prepared under the conditions.

In Example 6, the Si-containing negative electrode active material was prepared under the following conditions. A raw material in which Si and $SiO_x$ ($0<x\leq2$) were mixed was introduced to a reaction furnace and evaporated at 600°C for 5 hours at a vacuum degree of 10 Pa to obtain a silicon oxide, which was deposited on a suction plate and sufficiently cooled, and then a deposit was taken out and pulverized. Fine powder was removed from the pulverized silicon oxide by classification to obtain particles of D10:2.50 um. The obtained silicon oxide was subjected to heat treatment CVD with ethylene to form a silicon oxide of which the surface was coated with carbon. The silicon oxide and LiH powder were mixed so that a Li/Si molar ratio was 0.3 to 1.2, thereby forming mixed powder, which was heat-treated at 700°C for 4 to 10 hours in a nitrogen atmosphere. Subsequently, the heat-treated powder was recovered and pulverized in a mortar to prepare a Si-containing negative electrode active material in which the silicon oxide was doped with lithium.

In Example 7, the Si-containing negative electrode active material was prepared under the following conditions. A raw material in which Si and $SiO_x$ ($0<x\leq2$) were mixed was introduced to a reaction furnace and evaporated at 600°C for 5 hours at a vacuum degree of 10 Pa, the resulting product was deposited on a suction plate and sufficiently cooled, and then a deposit was taken out and pulverized. The pulverized silicon oxide was obtained as particles of D10:2.39 um without performing separate classification. The obtained silicon oxide was subjected to heat treatment CVD with ethylene to form a silicon oxide of which the surface was coated with carbon. The silicon oxide and LiH powder were mixed so that a Li/Si molar ratio was 0.3 to 1.2, thereby forming mixed powder, which was heat-treated at 700°C for 4 to 10 hours in a nitrogen atmosphere. Subsequently, the heat-treated powder was recovered and pulverized in a mortar to prepare a Si-containing negative electrode active material in which the silicon oxide was doped with lithium.

(Examples 8 to 9)

Negative electrodes, positive electrodes, and lithium secondary batteries were manufactured in the same manner as in Example 1, except that the negative electrode active material was prepared under the following conditions.

In Example 8, the Si-containing negative electrode active material was prepared under the following conditions. A raw material in which Si and $SiO_x$ ($0<x\leq2$) were mixed was introduced to a reaction furnace and evaporated at 600°C for 5 hours at a vacuum degree of 10 Pa, the resulting product was deposited on a suction plate and sufficiently cooled, and then a deposit was taken out and pulverized. Fine powder was removed from the pulverized silicon oxide by classification to obtain particles of D10:3.43 um. The obtained silicon oxide was subjected to heat treatment CVD with ethylene to form a silicon oxide of which the surface was coated with carbon. The silicon oxide and $Mg(OH)_2$ powder were mixed so that a Mg/Si molar ratio was 0.15 to 0.20, thereby forming mixed powder, which was heat-treated at 700°C for 4 to 10 hours in a nitrogen atmosphere. Subsequently, the heat-treated powder was recovered and pulverized in a mortar to prepare a Si-containing negative electrode active material in which the silicon oxide was doped with magnesium.

In Example 9, the Si-containing negative electrode active material was prepared under the following conditions. A raw material in which Si and $SiO_x$ ($0<x\leq2$) were mixed was introduced to a reaction furnace and evaporated at 600°C for 5 hours at a vacuum degree of 10 Pa, the resulting product was deposited on a suction plate and sufficiently cooled, and then a deposit was taken out and pulverized. The pulverized silicon oxide was obtained as particles of D10:2.42 um without performing separate classification. The obtained silicon oxide was subjected to heat treatment CVD with ethylene to form a silicon oxide of which the surface was coated with carbon. The silicon oxide and $Mg(OH)_2$ powder were mixed so that a Mg/Si molar ratio was 0.15 to 0.20, thereby forming mixed powder, which was heat-treated at 700°C for 4 to 10 hours in a nitrogen atmosphere. Subsequently, the heat-treated powder was recovered and pulverized in a mortar to prepare a Si-containing negative electrode active material in which the silicon oxide was doped with magnesium.

(Comparative Example 1)

In Comparative Example 1, a negative electrode, a positive electrode, and a lithium secondary battery were manufactured in the same manner as in Example 1, except that the negative electrode active material was prepared under the following conditions.

Silicon (Si) particles having an average particle diameter of 100 nm and pitch which is a petroleum/coal hydrocarbon residue were mixed at a weight ratio of 4:6 and mechanically stirred with high energy. The stirred mixture was fired at 900°C for 1 hour under a nitrogen atmosphere.

(Comparative Example 2)

In Comparative Example 2, a negative electrode, a positive electrode, and a lithium secondary battery were manufactured in the same manner as in Example 1, except that a silane gas was injected to a CVD coater at a flow speed of more than 100 mL/min and 600 mL/min or less during forming a Si-containing coating, the carbon structure was heated up to 600°C or higher at a heating rate of 5 to 20°C/min, and was maintained at 600°C or higher for about 120 minutes to manufacture a Si-containing negative electrode active material of a Si/C composite having a Si-containing coating formed on the outer surface and the inner pore of the porous carbon structure.

(Comparative Example 3)

In Comparative Example 3, a negative electrode, a positive electrode, and a lithium secondary battery were manufactured in the same manner as in Example 5, except that a silane gas was injected to a CVD coater at a flow speed of more than 100 mL/min and 600 mL/min or less during forming a Si-containing coating, the carbon structure was heated up to 600°C or higher at a heating rate of 5 to 20°C/min, and was maintained at 600°C or higher for about 120 minutes to manufacture a Si-containing negative electrode active material of a Si/C composite having a Si-containing coating formed on the outer surface and the inner pore of the porous carbon structure.

[Table 1]

| | $SEI_5$ | $SEI_{100}$ | $SEI_{100}$-$SEI_5$ | $T_5$ | $T_{100}$ | $T_{100}$-$T_5$ | SOH@60 |
|---|---|---|---|---|---|---|---|
| Example 1 | 2.0 | 3.9 | 1.9 | 1.99 | 3.97 | 1.98 | 3000 |
| Example 2 | 2.1 | 5.2 | 3.1 | 1.81 | 3.44 | 1.63 | 2400 |
| Example 3 | 3.4 | 6.9 | 3.5 | 1.69 | 3.03 | 1.34 | 2300 |
| Example 4 | 4.7 | 8.3 | 3.6 | 1.58 | 2.89 | 1.31 | 2100 |
| Example 5 | 5.4 | 13.4 | 8.0 | 1.61 | 3.35 | 1.74 | 2800 |
| Example 6 | 12.4 | 21.3 | 8.9 | 1.31 | 1.99 | 0.68 | 1200 |
| Example 7 | 2 | 10.1 | 8.1 | 1.46 | 3.50 | 2.04 | 600 |
| Example 8 | 1.7 | 6.5 | 4.8 | 1.46 | 2.85 | 1.39 | 900 |
| Example 9 | 12.4 | 19.6 | 7.2 | 1.31 | 3.75 | 2.44 | 700 |
| Comparative Example 1 | 10.9 | 27.7 | 16.8 | 1.13 | 2.35 | 1.22 | 150 |
| Comparative Example 2 | 24.5 | 43 | 18.5 | 1.35 | 1.70 | 0.35 | 600 |
| Comparative Example 3 | 2.0 | 13.2 | 11.2 | 1.99 | 4.42 | 2.43 | 500 |

Each of the examples and the comparative examples was evaluated referring to Table 1.

Referring to Table 1, Examples 1 to 9 in which the ($SEI_{100}$ - $SEI_5$) value defined in the present implementation satisfied 10 or less showed excellent life characteristics. Meanwhile, additionally, in Examples 1 to 6 and 8 in which the ($T_{100}$ - $T_5$) value satisfied 2 or less, the irreversible reaction in the negative electrode was more suppressed than in Examples 7 and 9 which did not satisfy the range, and as a result, better life characteristics were shown.

However, in Comparative Examples 1 to 3, the ($SEI_{100}$ - $SEI_5$) value was more than 10 and the decomposition reaction of the electrolyte solution by physical and chemical changes in the electrode active material was not suppressed, so that life characteristics were deteriorated as compared with the examples.

The present implementation may provide a negative electrode for a lithium secondary battery showing excellent life characteristics in a real lithium secondary battery including a negative electrode and a positive electrode.

As a means for achieving the effect, an implementation may provide a negative electrode for a lithium secondary battery including: a Si-containing negative electrode active material, wherein when a value derived according to the following Equation (1) by charging/discharging a lithium secondary battery including a negative electrode and a positive electrode including a Li-containing positive electrode active material n times, discharging the battery to 2.5 V, disassembling the battery to obtain the negative electrode and the positive electrode, and analyzing the negative electrode and the positive electrode is $SEI_n$, a $(SEI_{100} - SEI_5)$ value derived according to the following Equation (1) is controlled to a specific range, thereby suppressing a decomposition reaction of an electrolyte solution by physical and chemical changes of the electrode active material during a plurality of charges/discharges to provide a negative electrode showing excellent life characteristics in a real lithium secondary battery:

$$(1) \quad SEI_n = ([Si]_0/[Si]_n - 1) - ((C_{LL}*C_W/C_{MW}*(1-M_{Li}/M_{TM})*Li_{MW})/A_{LL})$$

wherein $[Si]_0$ is a wt% of Si to the total weight of a negative electrode active material layer when ICP analysis is performed on the negative electrode active material layer of a negative electrode obtained by disassembling a lithium secondary battery which is charged/discharged 0 times, $[Si]_n$ is a wt% of Si to the total weight of the negative electrode active material layer when ICP analysis is performed on the negative electrode active material layer of a negative electrode obtained by disassembling a lithium secondary battery which is charged/discharged n times and discharged to 2.5 V, and $C_{LL}$, $C_W$, $C_{MW}$, $M_{Li}$, $M_{TM}$, $Li_{MW}$, and $A_{LL}$ are values measured by analyzing a positive electrode and a negative electrode obtained by disassembling a lithium secondary battery which is charged/discharged n times and discharged to 2.5 V, in which $C_{LL}$ is a loading level (mg/cm$^2$) of the positive electrode active material layer, $C_W$ is ratio of a weight of the positive electrode active material to a weight of the positive electrode active material layer, $C_{MW}$ is a molar mass (g/mol) of the positive electrode active material, $M_{Li}$ is a lithium molar quantity (mol) in the positive electrode active material layer, $M_{TM}$ is a transition metal molar quantity (mol) in the positive electrode active material layer, $Li_{MW}$ is a lithium molar mass, and $A_{LL}$ is a loading level (mg/cm$^2$) of the negative electrode active material layer.

A specific implementation may provide a negative electrode with a more suppressed irreversible reaction by controlling a $(T_{100} - T_5)$ value derived according to the following equation (2) to a specific range, when a value derived according to the following Equation (2) by charging/discharging the lithium secondary battery including the negative electrode and the positive electrode n times, discharging the battery to 2.5 V, disassembling the battery to obtain the negative electrode and the positive electrode, and analyzing the negative electrode and the positive electrode is $T_n$, and thus, may provide a negative electrode showing better life characteristics in a real lithium secondary battery:

$$(2) \quad T_n = [M_{Li}/M_{Si}]_n$$

wherein $M_{Li}$ and $M_{Si}$ are values measured by analyzing a negative electrode obtained by disassembling a lithium secondary battery which was charged/discharged n times and discharged to 2.5 V, in which $M_{Li}$ is a lithium molar quantity (mol) in a negative electrode active material layer and $M_{Si}$ is a silicon molar quantity (mol) in a negative electrode active material layer.

Although the implementations of the present disclosure have been described above, the present disclosure is not limited to the implementations but may be made in various forms different from each other, and those skilled in the art will understand that the present disclosure may be implemented in other specific forms without departing from the technical spirits or the essential feature of the present disclosure. Therefore, it should be understood that the implementations described above are not restrictive, but illustrative in all aspects.

**Claims**

1. A negative electrode for a lithium secondary battery comprising: a Si-containing negative electrode active material,

   wherein when a value derived according to the following Equation (1) by charging/discharging a lithium secondary battery including a negative electrode and a positive electrode including a Li-containing positive electrode active material n times, discharging the battery to 2.5 V, disassembling the battery to obtain the negative electrode and the positive electrode, and analyzing the negative electrode and the positive electrode is $SEI_n$,
   a $(SEI_{100} - SEI_5)$ value is 10 or less:

$$(1) \quad SEI_n \quad = \quad ([Si]_0/[Si]_n-1) \quad - \quad ((C_{LL}*C_W/C_{MW}*(1-M_{Li}/M_{TM})*Li_{MW})/A_{LL})$$

wherein $[Si]_0$ is a wt% of Si to the total weight of a negative electrode active material layer when ICP analysis is performed on the negative electrode active material layer of a negative electrode obtained by disassembling a lithium secondary battery which is charged/discharged 0 times, $[Si]_n$ is a wt% of Si to the total weight of the negative electrode active material layer when ICP analysis is performed on the negative electrode active material layer of a negative electrode obtained by disassembling a lithium secondary battery which is charged/discharged n times and discharged to 2.5 V, and $C_{LL}$, $C_W$, $C_{MW}$, $M_{Li}$, $M_{TM}$, $Li_{MW}$, and $A_{LL}$ are values measured by analyzing a positive electrode and a negative electrode obtained by disassembling a lithium secondary battery which is charged/discharged n times and discharged to 2.5 V, in which $C_{LL}$ is a loading level (mg/cm$^2$) of the positive electrode active material layer, $C_W$ is ratio of a weight of the positive electrode active material to a weight of the positive electrode active material layer, $C_{MW}$ is a molar mass (g/mol) of the positive electrode active material, $M_{Li}$ is a lithium molar quantity (mol) in a positive electrode active material layer measured by ICP analysis, $M_{TM}$ is a transition metal molar quantity (mol) in the positive electrode active material layer measured by ICP analysis, $Li_{MW}$ is a lithium molar mass, and $A_{LL}$ is a loading level (mg/cm$^2$) of the negative electrode active material layer.

2. The negative electrode for a lithium secondary battery of claim 1, wherein when a value derived according to the following Equation (2) by charging/discharging the lithium secondary battery including the negative electrode and the positive electrode n times, discharging the battery to 2.5 V, disassembling the battery to obtain the negative electrode, and analyzing the negative electrode is $T_n$,

a ($T_{100}$ - $T_5$) value is 2 or less:

$$(2) \quad T_n \ = \ [M_{Li}/M_{Si}]_n$$

wherein $M_{Li}$ and $M_{Si}$ are values measured by analyzing a negative electrode obtained by disassembling a lithium secondary battery which was charged/discharged n times and discharged to 2.5 V, in which $M_{Li}$ is a lithium molar quantity (mol) in a negative electrode active material layer and $M_{Si}$ is a silicon molar quantity (mol) in the negative electrode active material layer.

3. The negative electrode for a lithium secondary battery of claim 1, wherein the $C_{LL}$ value in Equation (1) is 12 to 30 mg/cm$^2$.

4. The negative electrode for a lithium secondary battery of claim 1, wherein the $C_W$ value in Equation (1) is 0.9 or more.

5. The negative electrode for a lithium secondary battery of claim 1, wherein the $A_{LL}$ value in Equation (1) is 1 to 20 mg/cm$^2$.

6. The negative electrode for a lithium secondary battery of any one of claims 1 to 5, wherein the Si-containing negative electrode active material includes one or more of $SiO_x$ (0<x≤2), Si, a Si-containing alloy, and a Si/C composite.

7. The negative electrode for a lithium secondary battery of claim 6, wherein the Si/C composite includes a porous carbon structure; and a Si-containing coating provided on an outer surface and an inner pore of the porous carbon structure.

8. The negative electrode for a lithium secondary battery of any one of claims 1 to 5, wherein the Si-containing negative electrode active material includes one or more of Li, Na, Mg, and K.

9. The negative electrode for a lithium secondary battery of claim 8, wherein the Si-containing negative electrode active material includes lithium silicate represented by the following Chemical Formula 1:

[Chemical Formula 1]      $Li_xSi_yO_z$

wherein 1≤x≤6, 1≤y≤4, and 0<z≤7.

10. The negative electrode for a lithium secondary battery of any one of claims 1 to 9, wherein the Si-containing negative electrode active material has a D10 of 2.0 um or more.

11. A lithium secondary battery comprising the negative electrode for a lithium secondary battery of any one of claims 1 to 10.

Europäisches
Patentamt

European
Patent Office

Office européen
des brevets

# EUROPEAN SEARCH REPORT

**Application Number**

EP 24 15 8733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/365883 A1 (LEE YONG SEOK [KR] ET AL) 19 November 2020 (2020-11-19) | 1-6,8-11 | INV. H01M4/131 H01M4/134 H01M4/36 |
| Y | * example 1 *<br>- - - - - | 7 | |
| Y | US 2020/266444 A1 (KIM JOON SUP [KR] ET AL) 20 August 2020 (2020-08-20)<br>* paragraph [0012] *<br>- - - - - | 7 | H01M4/38 H01M4/48 H01M10/0525 |

**TECHNICAL FIELDS SEARCHED (IPC)**

H01M

The present search report has been drawn up for all claims

| Place of search | Date of completion of the search | Examiner |
|---|---|---|
| Munich | 17 July 2024 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8733

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | | Publication date | Patent family member(s) | | Publication date |
|---|---|---|---|---|---|
| US 2020365883 | A1 | 19-11-2020 | CN | 111952658 A | 17-11-2020 |
| | | | CN | 118281294 A | 02-07-2024 |
| | | | EP | 3739674 A1 | 18-11-2020 |
| | | | KR | 20200132749 A | 25-11-2020 |
| | | | US | 2020365883 A1 | 19-11-2020 |
| | | | US | 2024079568 A1 | 07-03-2024 |
| US 2020266444 | A1 | 20-08-2020 | US | 2020266444 A1 | 20-08-2020 |
| | | | US | 2024047678 A1 | 08-02-2024 |

For more details about this annex : see Official Journal of the European Patent Office, No. 12/82

EPO FORM P0459